# DEMANDE DE BREVET EUROPEEN

(11) **EP 4 753 126 A1**
(43) Date de publication de la demande: **03.06.2026**
(21) Numéro de dépôt: 25219074.9
(22) Date de dépôt: 27.11.2025
(51) Int. Cl.: H02K 55/02, B64D 27/33, B64D 27/34, H02K 5/04, H02K 3/47

(54) **MOTEUR SUPRACONDUCTEUR COMPORTANT UN BOÎTIER AVEC COMPARTIMENTS POUR SEPARER ET ISOLER CHAQUE BOBINE**

(30) Priorité: 29.11.2024 FR 2413180
(71) Demandeur: Airbus (S.A.S.), 31700 Blagnac (FR)
(72) Inventeur: COLLE, Alexandre, 31700 Blagnac (FR); ABDOUH, Reda, 31700 Blagnac (FR); DUNOYER, François, 31700 Blagnac (FR)
(74) Mandataire: Cabinet Le Guen Maillet

(57) **Abrégé**

Un moteur supraconducteur (100) comporte un rotor (102) portant des aimants permanents (112) et mobile en rotation autour d'un axe longitudinal, un stator (103) portant des bobines (113) destinées à être alimentées électriquement pour générer un champ magnétique entraînant en rotation le rotor grâce aux aimants permanents et un boîtier moteur (120). Le boitier moteur comporte plusieurs compartiments (126) hermétiques les uns par rapport aux autres. Chaque compartiment (126) enfermant une ou plusieurs bobines (113) du stator (103). Chaque compartiment (126) étant mis au vide afin de former une barrière d'isolation thermique pour la ou les bobines (113) que le compartiment (126) en question renferme. Ainsi, d'éventuelles particules qui pourraient se détacher d'une bobine défaillante n'endommagent pas la barrière d'isolation thermique de toute autre bobine qui serait logée dans un autre compartiment.

## Description

### DOMAINE TECHNIQUE

La présente invention se rapporte au domaine général des moteurs supraconducteurs.

### ÉTAT DE LA TECHNIQUE ANTÉRIEURE

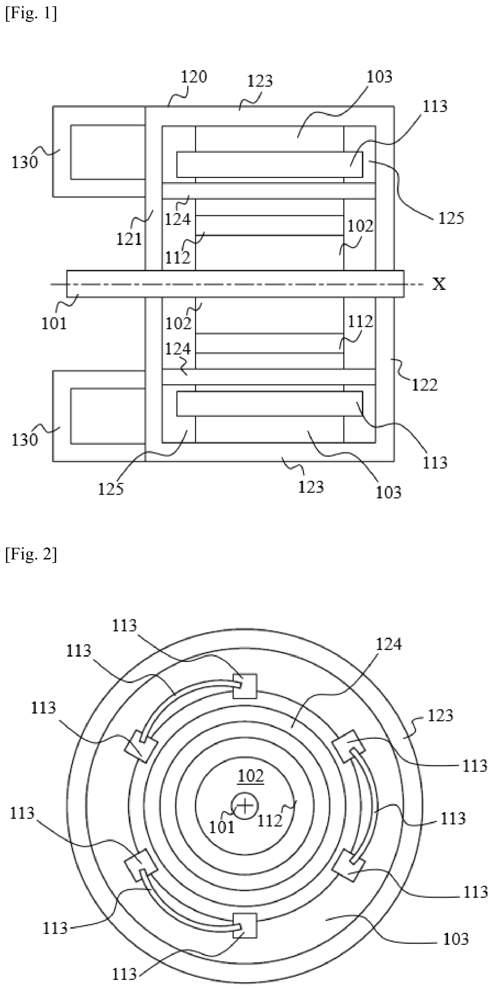

Comme schématiquement illustré sur les Figs. 1 et 2, un moteur supraconducteur de l'état de la technique comporte un rotor 102 qui présente un cœur de rotor réalisé dans un matériau ferromagnétique tel que l'ensemble des alliages de fer utilisés pour les machines électriques. Le cœur de rotor est globalement cylindrique et présente un alésage central dans lequel est emmanché et fixé rigidement un arbre moteur 101. L'arbre moteur 101 est coaxial avec l'axe de révolution du cœur de rotor, en superposition avec l'axe longitudinal X du moteur supraconducteur.

Le rotor 102 comporte également des aimants permanents portés par le cœur de rotor. Il y a plusieurs aimants permanents répartis angulairement et régulièrement en périphérie du cœur de rotor et espacés les uns des autres. Par souci de simplicité, les aimants permanents ne sont pas détaillés sur les Figs. 1 et 2 et sont représentés par un ensemble 112.

Le moteur supraconducteur comporte un stator 103 qui est disposé autour du rotor 102 et qui comporte un cœur de stator réalisé dans un matériau ferromagnétique tel que l'ensemble des alliages de fer utilisés pour les machines électriques. Le cœur de stator prend une forme globalement cylindrique creuse coaxiale avec l'axe longitudinal X.

Le stator 103 comporte un ensemble de plusieurs bobines 113 portées par le cœur de stator et réparties angulairement et régulièrement en périphérie interne du cœur de stator (pour faire face à l'ensemble d'aimants permanents 112) et espacées les unes des autres. Chaque bobine 113 est constituée d'un ruban en matériau supraconducteur. En particulier, le ruban de matériau supraconducteur est enroulé radialement à l'axe longitudinal X de manière à former une dite bobine 113.

Le rotor 102 et le stator 103 sont logés dans un boîtier moteur 120 qui est cylindrique et fermé à ses deux extrémités par des flancs 121, 122 dont au moins un est percé d'un orifice central permettant le passage de l'arbre moteur 101. Le stator 103 est monté fixe à l'intérieur du boîtier moteur 120 tandis que l'ensemble formé par le rotor 102 et l'arbre moteur 101 est monté libre en rotation à l'intérieur du boîtier moteur 120.

En fonctionnement, chaque bobine 113 est alimentée électriquement pour générer un champ magnétique qui interagit avec les aimants permanents entraînant ainsi en rotation le rotor 102 et l'arbre moteur 101. Un circuit d'alimentation électrique et une circuiterie électronique de contrôle de l'alimentation électrique destinée à alimenter électriquement chaque bobine 113 sont installés dans un ou plusieurs boîtiers de contrôle 130, par exemple fixés sur le boîtier moteur 120. Par souci de simplicité, la liaison électrique reliant l'alimentation électrique et chaque bobine 113 n'est pas illustrée sur les Figs. 1 et 2.

Le boîtier moteur 120 comporte une paroi intérieure 124 et une paroi extérieure 123. Par exemple, la paroi intérieure 124 et la paroi extérieure 123 sont sous forme de cylindres qui sont coaxiaux avec l'axe longitudinal X. La paroi intérieure 124 est disposée entre le rotor 102 et le stator 103, et la paroi extérieure 123 est disposée autour du stator 103 (du côté le plus éloigné de l'axe longitudinal X). La paroi intérieure 124 et la paroi extérieure 123 s'étendent entre les deux flancs 121, 122 auxquels lesdites parois sont fixées hermétiquement pour délimiter entre elles 123, 124 et les deux flancs 121, 122, à l'intérieur du boîtier moteur 120, une chambre 125 dans laquelle sont logés le stator 103 et les bobines 113 qu'il porte. Cette chambre 125 est mise au vide et sert d'isolation thermique aux bobines 113 du stator 103.

Si une défaillance d'une bobine 113 devait survenir, des particules de celle-ci pourraient se détacher et un risque d'atteinte aux performances de l'isolation thermique de la chambre 125 pourrait apparaître. Les performances du moteur supraconducteur pourraient s'en trouver dégradées.

Il est alors souhaitable de fournir une solution qui permette d'améliorer les performances du moteur supraconducteur en cas de défaillance d'une bobine.

### EXPOSÉ DE L'INVENTION

A cet effet, il est proposé ici un moteur supraconducteur comportant un rotor portant des aimants permanents et mobiles en rotation autour d'un axe longitudinal, un stator portant des bobines destinées à être alimentées électriquement pour générer un champ magnétique entraînant en rotation le rotor grâce aux aimants permanents, et un boîtier moteur.

Le moteur supraconducteur est tel que le boitier moteur comporte plusieurs compartiments hermétiques les uns par rapport aux autres, chaque compartiment enfermant une ou plusieurs bobines du stator, chaque compartiment étant mis au vide afin de former une barrière d'isolation thermique pour la ou les bobines que le compartiment en question renferme.

Ainsi, en séparant les bobines dans des compartiments hermétiques les uns par rapport aux autres, des particules qui se détacheraient d'une bobine défaillante n'endommageraient pas la barrière d'isolation thermique de toute autre bobine qui serait logée dans un autre compartiment que celui où est logée la bobine défaillante. Les performances du moteur supraconducteur en cas de défaillance d'une bobine s'en trouvent améliorées.

Dans une réalisation particulière, le moteur supraconducteur est agencé en outre de sorte que chaque bobine est, grâce aux compartiments, isolée d'au moins la moitié des bobines du stator.

Dans une réalisation particulière, les compartiments sont répartis angulairement en anneau autour de l'axe longitudinal.

Dans une réalisation particulière, les compartiments sont des portions d'anneau qui sont juxtaposées angulairement pour former un anneau autour de l'axe longitudinal.

Dans une réalisation particulière, le stator comporte plusieurs ensembles de bobines, chaque ensemble de bobines étant agencé en anneau coaxial avec l'axe longitudinal, et les bobines de chaque ensemble sont logées dans un ou plusieurs compartiments distincts de tout autre compartiment utilisé pour une ou plusieurs bobines d'un autre dit ensemble de bobines.

Dans une réalisation particulière, chaque bobine est logée dans un comportement qui lui est dédié parmi lesdits compartiments.

Dans une réalisation particulière, chaque compartiment est séparé de tout compartiment voisin par une paroi en matériau diélectrique.

Il est également proposé un aéronef comprenant au moins un moteur supraconducteur dans l'une quelconque des réalisations présentées ci-dessus.

### BRÈVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] montre une vue en coupe simplifiée d'un agencement de moteur supraconducteur selon l'état de la technique ;
[Fig. 2] montre une vue de dessus simplifiée de l'agencement de moteur supraconducteur de la Fig. 1 ;
[Fig. 3] montre une vue de dessus simplifiée d'un premier agencement de moteur supraconducteur selon l'invention ;
[Fig. 4] montre une vue en perspective du premier agencement de moteur supraconducteur selon l'invention ;
[Fig. 5] montre une vue en coupe simplifiée d'un deuxième agencement de moteur supraconducteur selon l'invention ;
[Fig. 6] montre une vue en perspective du deuxième agencement de moteur supraconducteur selon l'invention ; et
[Fig. 7] montre une vue en perspective d'un aéronef comportant au moins un moteur supraconducteur selon le premier ou deuxième agencement de moteur supraconducteur selon l'invention.

### EXPOSÉ DÉTAILLÉ DE MODES DE RÉALISATION

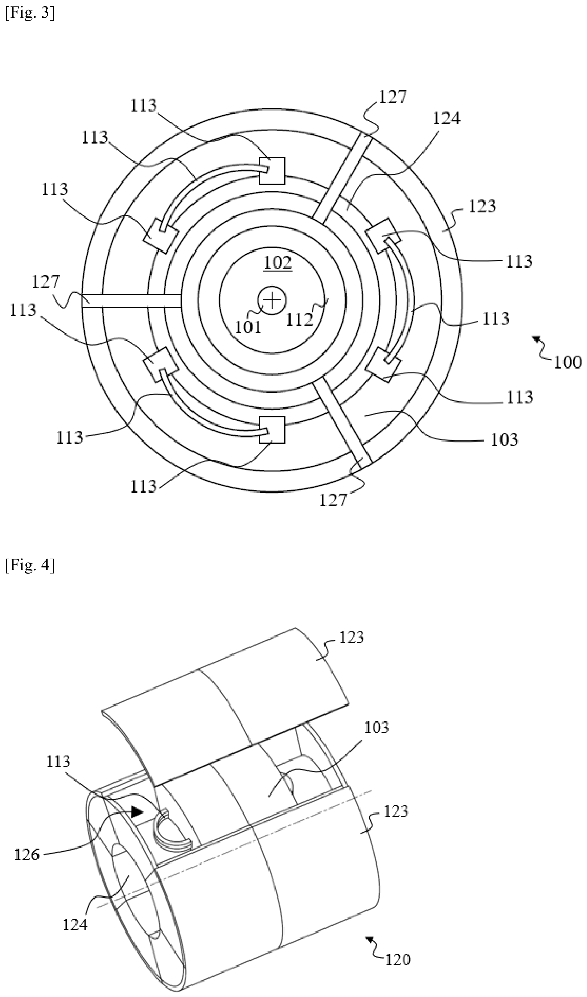

Les **Figs. 3 et 4** montrent un premier agencement de moteur supraconducteur 100 selon l'invention.

Comme sur les Figs. 1 et 2, le moteur supraconducteur 100 du premier agencement comporte le rotor 102 avec son cœur de rotor auquel est fixé rigidement l'arbre moteur 101, et ses aimants permanents, ainsi que le stator 103 qui est disposé autour du rotor 102, avec son cœur de stator et son ensemble de bobines 113.

Le stator 103 est monté fixe à l'intérieur du boîtier moteur 120. Le rotor 102 peut être aussi logé dans le boîtier moteur. Dans un mode de réalisation, le boîtier moteur 120 est fermé à ses deux extrémités par des flancs 121, 122 dont au moins un est percé d'un orifice central permettant le passage de l'arbre moteur 101, et l'ensemble formé par le rotor 102 et l'arbre moteur 101 est monté libre en rotation à l'intérieur du boîtier moteur 120.

Le moteur supraconducteur 100 du premier agencement diffère du moteur supraconducteur des Figs. 1 et 2 en ce qui concerne la constitution de la barrière d'isolation thermique des bobines 113 apportée par la mise au vide. En effet, dans le premier agencement des Figs. 3 et 4, le boitier moteur 120 comporte plusieurs compartiments 126 hermétiques les uns par rapport aux autres, chaque compartiment 126 enfermant une ou plusieurs bobines 113 du stator 103. Alors que, dans l'agencement des Figs. 1 et 2, les bobines du stator sont logées dans la même chambre 120.

Chaque compartiment 126 est mis au vide afin de former une barrière d'isolation thermique pour la ou les bobines 113 que le compartiment 126 en question renferme.

Plus précisément, dans le premier agencement, les compartiments 126 sont répartis angulairement en anneau autour de l'axe longitudinal X. Dans une réalisation particulière, les compartiments 126 sont des portions d'anneau qui sont juxtaposées angulairement pour former un anneau autour de l'axe longitudinal X.

Par exemple, les compartiments 126 les uns contre les autres forment une couronne dans laquelle s'inscrit donc le stator 103, comme illustré sur les Figs. 3 et 4, où la paroi intérieure 124, la paroi extérieure 123 et les flancs 121, 122 du boîter moteur 120 sont constitués par les compartiments 126 eux-mêmes (sur la Fig. 4, une portion de la paroi extérieure 123 du boîter moteur 120 est représentée séparée du reste de ladite paroi extérieure 123, pour laisser apparaître l'intérieur d'un compartiment 126).

Il convient de noter que les compartiments 126 peuvent être des boîtiers hermétiques les uns par rapport aux autres qui sont assemblés à l'intérieur du boîter moteur 120, c'est-à-dire que les compartiments 126 s'inscrivent dans l'espace formé par la paroi intérieure 124, la paroi extérieure 123 et les flancs 121, 122 du boîter moteur 120.

Les bobines 113 sont ainsi réparties dans au moins deux compartiments 126 distincts. Ainsi, si une bobine 113 est endommagée, cela n'impactera pas la barrière thermique, qui est formée par la mise au vide, de toutes les autres bobines 113.

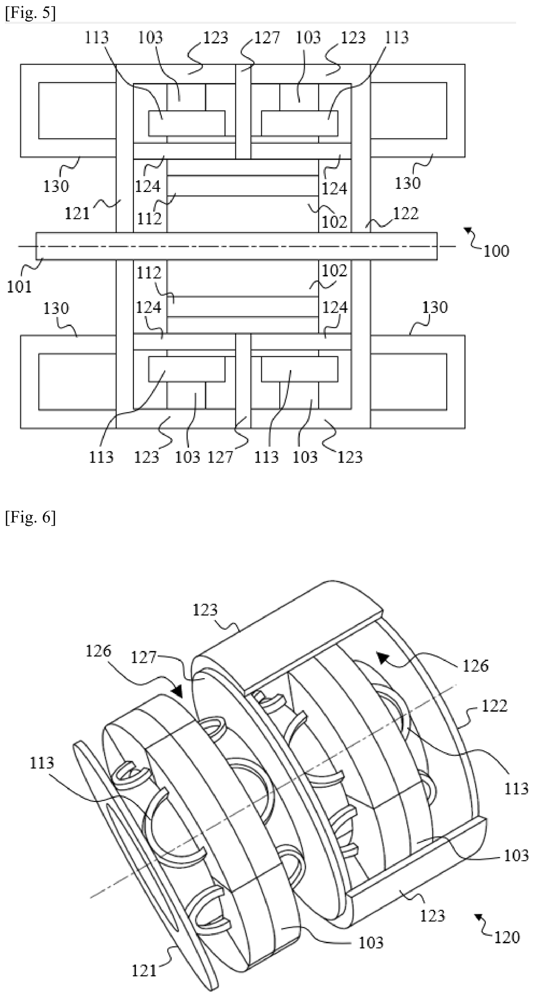

Les Figs. 5 et 6 montrent un deuxième agencement de moteur supraconducteur 100 selon l'invention, où les compartiments 126 sont disposés axialement plutôt que radialement.

Le moteur supraconducteur 100 du deuxième agencement des Figs. 5 et 6 diffère aussi du moteur supraconducteur des Figs. 1 et 2 quant à la constitution de la barrière d'isolation thermique des bobines 113 qui est formée par la mise au vide. Dans le deuxième agencement, le boitier moteur 120 comporte aussi plusieurs compartiments 126 hermétiques les uns par rapport aux autres, chaque compartiment 126 enfermant une ou plusieurs bobines 113 du stator 103.

Mais plus précisément, dans ce deuxième agencement, le stator 103 comporte plusieurs ensembles de bobines 113, où chaque ensemble de bobines 113 est agencé en anneau coaxial avec l'axe longitudinal X. Il y a ainsi plusieurs rangées de bobines 113 en périphérie interne du cœur de stator (pour faire face à l'ensemble d'aimants permanents 112). A noter que les aimants permanents peuvent être partagés par plusieurs rangées de bobines 113. Sur chaque rangée, les bobines 113 sont réparties angulairement et régulièrement et espacées les unes des autres, afin de former l'anneau susmentionné.

Alors, dans ce deuxième agencement, les bobines 113 de chaque ensemble (c'est-à-dire de chaque rangée ou anneau) sont logées dans un ou plusieurs compartiments 126 distincts de tout autre compartiment 126 utilisé pour la ou les bobines 113 d'un autre dit ensemble de bobines 113. Ici aussi, les bobines 113 sont réparties dans au moins deux compartiments 126 distincts.

Par exemple, chaque compartiment 126 forme une couronne dans laquelle s'inscrit donc un anneau (une rangée de bobines 113) du stator 103, comme illustré sur les Figs. 5 et 6, où la paroi intérieure 124, la paroi extérieure 123 et les flancs 121, 122 du boîter moteur 120 sont constitués par les compartiments 126 eux-mêmes (sur la Fig. 6, une portion importante de la paroi extérieure 123 du boîter moteur 120 est représentée séparée du reste de ladite paroi extérieure 123, pour laisser apparaître l'intérieur de deux compartiments 126 juxtaposés).

Il peut être noté que, avec le deuxième agencement, il peut être utile de mettre en place un plus grand nombre de boîtiers de contrôle 130 pour intégrer le circuit d'alimentation électrique et la circuiterie électronique de contrôle de l'alimentation électrique destinée à alimenter électriquement chaque bobine 113, comme illustré sur la Fig. 5.

Dans un mode de réalisation particulier applicable au premier arrangement comme au deuxième arrangement, chaque bobine 113 est, grâce aux compartiments 126, isolée d'au moins la moitié des bobines 113 du stator 103. Ainsi, si une bobine 113 est endommagée, la barrière thermique qui est formée par la mise au vide et qui protège au moins la moitié des bobines 113 est préservée (ce qui doit permettre de préserver au moins 50% de puissance moteur).

Dans un mode de réalisation particulier applicable au premier arrangement comme au deuxième arrangement, chaque bobine 113 dispose de son compartiment 126 dédié, l'isolant ainsi de toute autre bobine 113 du stator 103. Ainsi, si une bobine 113 est endommagée, cela n'impactera pas la barrière thermique qui est formée par la mise au vide et qui protège chacune des autres bobines 113.

Dans un mode de réalisation particulier applicable au premier arrangement comme au deuxième arrangement, chaque compartiment 126 est séparé de tout compartiment voisin (parmi l'ensemble des compartiments 126) par une paroi 127 en matériau diélectrique. Ainsi, l'isolation thermique apportée par chaque compartiment 126 à chaque bobine 113 qu'il renferme est renforcée par une isolation électrique d'un compartiment 126 à l'autre, ce qui améliore la performance du moteur supraconducteur 100.

A noter que les bobines 113 peuvent être associées à des éléments cryogéniques pour réaliser un échange de chaleur. Par exemple, ces éléments cryogéniques comportent des canalisations positionnées le long des bobines 113 et parcourues par un fluide caloporteur qui provient d'un réservoir de fluide caloporteur et qui est entraîné par tout système approprié comme une pompe. Le fluide caloporteur est par exemple de l'hélium gazeux. Ainsi, dans chaque compartiment 126, la barrière d'isolation thermique est réalisée par une couche de vide enveloppant chaque bobine 113 et chaque élément cryogénique s'y trouvant.

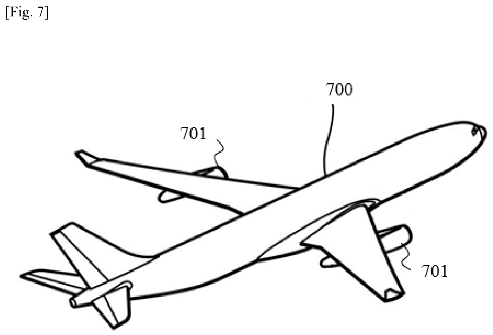

La Fig. 7 montre une vue en perspective d'un aéronef 700.

L'aéronef 700 comporte au moins un moteur supraconducteur 100 selon le premier ou deuxième agencement. Par exemple, l'aéronef 700 utilise un tel moteur supraconducteur dans chaque moteur de propulsion 701, typiquement pour entraîner une hélice en rotation.

## Revendications

1. Un moteur supraconducteur (100) comportant :
- un rotor (102) portant des aimants permanents et mobiles en rotation autour d'un axe longitudinal (X),
- un stator (103) portant des bobines (113) destinées à être alimentées électriquement pour générer un champ magnétique entraînant en rotation le rotor (102) grâce aux aimants permanents,
- un boîtier moteur (120),
le moteur supraconducteur étant **caractérisé en ce que** le boitier moteur (120) comporte plusieurs compartiments (126) hermétiques les uns par rapport aux autres, chaque compartiment (126) enfermant une ou plusieurs bobines (113) du stator (103), chaque compartiment (126) étant mis au vide afin de former une barrière d'isolation thermique pour la ou les bobines (113) que le compartiment (126) en question renferme.

2. Le moteur supraconducteur (100) selon la revendication 1, agencé en outre de sorte que chaque bobine (113) est, grâce aux compartiments (126), isolée d'au moins la moitié des bobines (113) du stator (103).

3. Le moteur supraconducteur (100) selon la revendication 1 ou 2, dans lequel les compartiments (126) sont répartis angulairement en anneau autour de l'axe longitudinal (X).

4. Le moteur supraconducteur (100) selon la revendication 3, dans lequel les compartiments (126) sont des portions d'anneau qui sont juxtaposées angulairement pour former un anneau autour de l'axe longitudinal (X).

5. Le moteur supraconducteur (100) selon la revendication 1 ou 2, dans lequel le stator (103) comporte plusieurs ensembles de bobines (113), chaque ensemble de bobines (113) étant agencé en anneau coaxial avec l'axe longitudinal (X), les bobines (113) de chaque ensemble étant logées dans un ou plusieurs compartiments (126) distincts de tout autre compartiment (126) utilisé pour la ou les bobines (113) d'un autre dit ensemble de bobines (113).

6. Le moteur supraconducteur (100) selon l'une quelconque des revendications 1 à 5, dans lequel chaque bobine (113) est logée dans un comportement (126) qui lui est dédié parmi lesdits compartiments (126).

7. Le moteur supraconducteur (100) selon l'une quelconque des revendications 1 à 6, dans lequel chaque compartiment (126) est séparé de tout compartiment (126) voisin par une paroi (127) en matériau diélectrique.

8. Un aéronef (700) comprenant au moins un moteur supraconducteur (100) selon l'une quelconque des revendications précédentes.
